# EUROPEAN PATENT SPECIFICATION

(11) **EP 3 192 939 B1**
(45) Date of publication and mention of the grant of the patent: **28.08.2019**
(21) Application number: 17150881.5
(22) Date of filing: 10.01.2017
(51) Int. Cl.: E04F 19/04

(54) **SKIRTING BOARD, DECORATIVE SYSTEM AND METHOD FOR MANUFACTURING A SKIRTING BOARD**
FUSSLEISTE, DEKORATIONSSYSTEM UND VERFAHREN ZUR HERSTELLUNG EINER FUSSLEISTE
PLINTHE, SYSTEME DE DÉCORATION ET PROCEDE DE FABRICATION DE PLINTHE

(30) Priority: 14.01.2016 BE 201605026
(43) Date of publication of application: 19.07.2017
(73) Proprietor: IVC, BVBA, 8580 Avelgem (BE)
(72) Inventor: BALCAEN, Louis Wilfried Lieven, 8587 Spiere (BE); VAN MOORLEGHEM, Cindy, 9790 Wortegem-Petegem (BE)
(74) Representative: Schacht, Benny Marcel Corneel

(56) References cited:
- WO-A1-2005/059270
- CH-A- 355 282
- DE-U1- 20 000 298

## Description

The present invention relates to a skirting board, comprising a core with an upper side, an opposed lower side and a front side and back side situated opposite to each other and extending between the upper side and the lower side, and a plate-shaped material, which is attached to the core and covers at least the front side or forms at least a visible side of the skirting board.

Skirting boards or finishing profiles for finishing floors are widely known in the state of the art., for example, from CH 355282 and/or BE 1019285. The latter document discloses all features of claims 1 and 13 except those relating to the plate shaped material, its thickness, its extension at the bottom and the basic layer. Instead it discloses a flexible lip formed by continuation of the two-layered vinyl containing top cover and a downwards tapering triangular core portion. Known skirting boards, for example, have a core of wood or a wood-based material, for example, a core of pressed wood fibers, onto which a synthetic material sheet is laminated. The sheet serves for protecting the core against external influences, such as mechanical impact or moisture. Further, the sheet may be provided with a pattern for giving the skirting board, for example, a natural appearance, such as a wood or stone pattern.

This aim is achieved by a skirting board accordi ng to the present invention as defined in claim 1, wherein a plate-shaped material at least partially forms the visible side of the skirting board and wherein the plate-shaped material, in the case of a skirting board leaning upright against a wall, for example, seen from the upper side of the core, extends to beyond the lower side of the core. In the case of ski rti ng boards with a visible side which is situated substantially in a plane extending parallel or approximately parallel to the floor surface, the plate-shaped material preferably extends in the respective plane up to beyond an edge of the aforementioned core.

This means that, in the case of upright-standing skirting boards, the plate-shaped material protrudes from the lower side of the core, such that the free extremity of the plate-shaped material is situated at a distance from the lower side of the core. The distance between the free extremity of the plate-shaped material and the lower side of the core in practice will be shorter than the height of the front side of the core. When the skirting board is attached at the location of a transition between a floor and a wall, the back side of the core is di rected towards the wall and the lower side of the core is directed towards the floor. In practice, the plate-shaped material may have a higher density than the core. An advantage of the skirting board according to the invention is that, when installing the skirting board on a floor, the core is situated at a distance from the floor. This offers the possibility of making the core of a material which is not resistant against water and making a plate-shaped material of a waterproof material in order to obtain a waterproof skirting board. In the state of the art, it is not common to make high-quality skirting boards, and certainly not waterproof skirting boards, of relatively cheap material. When use is made of economically advantageous, low-quality material for the core of the skirting board, for example, material having a very low density, the back side of the core can be attached to a wall, for example, with glue instead of with the common mounti ng clips. Further, the skirting board according to the invention offers the possibility of accommodating cables in the space underneath the core at the si de of the plate-shaped material directed towards the core.

By the term 'plate-shaped material is meant that it is a thin piece of a certain material, the thickness of which is much smaller than the length and width, for example, a sheet, a lamina, a skin, a fleece, a slab, a foil and the like. Preferably, the plate-shaped materi al shows a certain stiffness, for example, a stiffness allowing that the skirting board can rest on the protruding portion of the plate-shaped material without hereby creating any considerable deformations.

At least the side of the plate-shaped material di rected away from the core covers the front side and the upper side of the core in an uninterrupted manner, such that a natural appearance of the skirting board can be obtained when it is provided at the location of a transition between a floor and a wall. When there is a sharp bend between the upper side and the front side, it may be an advantage to interrupt the plate-shaped material, in accordance with the invention, at the side directed towards the core by a groove, in order to restrict the local tension in the material.

In a practical embodiment, the thickness of the plate-shaped material is smaller than the distance between the front side and the back side of the core, and/or smaller than the distance between the upper side and the lower side of the core. The plate-shaped material thus forms a relatively thin layer on the core. In accordance with the invention, it has a thickness which is larger than 1.8 mm. Preferably, the thickness is larger than 2 mm in order to provide sufficient strength without necessitating support of the core for the side directed to the core at the location of the protruding portion. In practice, the thickness of the plate-shaped material shall be smaller than 5 mm. The distance by which the plate-shaped material protrudes beyond the edge of the core preferably is between 30 and 150% of the thickness of the skirting board and preferably is greater than the thickness of the plate-shaped material.

The plate-shaped material is a synthetic material sheet. The synthetic material sheet can be adhered to the core, for example, by means of gluing or laminating. In accordance with the invention, the synthetic material sheet is made of a vinyl-containing material, preferably of luxury vinyl flooring material. From this, also floor coverings, such as floor tiles or floor panels, are made, which products in general also are indicated by LVT (Luxury Vinyl Tile). Luxury vinyl flooring, such as luxury vinyl tile (LVT) is a category of thermoplastics-based floor covering products. Luxury vinyl flooring products can be provided as roll material, which is glued onto a basic layer, but also as planks, which can be provided with a locking profile for interconnecting the planks. A luxury vinyl flooring product can be composed of three layers: a basic layer, a decoration layer and a transparent, possibly wear-resistant, top layer. A plate or panel of LVT material, on the one hand, is bendable, however, on the other hand, in particular with relatively short pieces, is strong in a direction in the plane of the plate-shaped material.

The core of the skirting board can be made of a wood-containing material, for example, pressed wood fibers, such as MDF, HDF, WPC or a thermoplastic or extruded material, or the like.

In a specific embodiment, the portion of the plate-shaped material protruding from the lower side of the core is provided with at least one groove extending in the longitudi nal di rection of the sking board and being situated at the side of the plate-shaped material directed towards the core. This offers the possibility of adapting the height, or the extent to which the plate-shaped material is protruding beyond the core, of the skirting board in a simple manner by cutting the plate-shaped material at the location of the groove by means of a simple cutter knife.

In a further embodi ment, the groove is a first groove and the plate-shaped material is provided with at least a second groove extending parallel to the first groove and being situated at the side of the plate-shaped material directed toward the core. Consequently, the end user is enabled to choose from diverse skirting board heights. The invention also relates to a decoration system in accordance with claim 11, comprising a floor covering which is made of a luxury vinyl flooring material and a skirting board according to claim 1, wherein the plate-shaped material is also made of a luxury vinyl flooring material. An advantage of this decoration system isthatthe skirting board and the floor are made of the same material and have the same appearance. The decoration pattern and/or the surface structure then can be, for example, the same, such that a perfect 'matching between floor covering and skirting board is obtained. It is also known that luxury vinyl flooring offers a high degree of wear resistance and waterproofness, such that the skirting board also comprises these features. It is clear that the skirting board of this decoration system can have diverse designs and functions. Preferably, this relates to a skirting board which is intended for being applied standing upright and forms a transition between a floor covering and a wall. According to another example, this relates to a skirting board which is intended for being applied in the floor surface in order to form an expansion profile, a transition profile or the like.

The invention also relates to a method for manufacturing a skirting board in accordance with claim 13, with a core and a provided-thereon plate-shaped material forming a visible side, as described herein above, wherein the core to be formed comprises a first core part and a second core part, which core parts are secured to the plate-shaped material and each are provided with respective contact locations situated at a distance from each other, wherein the first and second core part are moved towards each other with a bending of the plate-shaped material and are secured to each other at the location of the contact locations in order to form the core of the skirting board. This appears to be a simple, however, effective method for bending the plate-shaped material at the desired location and forming the final core of the skirting board.

The fi rst and second core part are formed by first securi ng the plate-shaped material to a substrate and thereafter providing a V-groove in the substrate in the direction of the plate-shaped material. Hereby, after bringing the core parts towards each other, a miter connection is created. The plate-shaped material is bent at the location of the tip of the V-groove. In practice, the V-groove continues up into the plate-shaped material, such that the two formed core parts after the milling treatment are separate from each other.

The boundary surfaces at opposite sides of the V-groove can form the contact locations, which are glued to each other in order to form the core of the skirting board. The side of the one core part adhered to the plate-shaped material forms the upper side of the final core, whereas the side of the other core part adhered to the plate-shaped material forms the front side of the final core or forms a part of this front side.

It is clear that the aforementioned core, apart from a first and second core part, may comprise still further core parts.

In accordance with the invention, the plate-shaped material, seen from the substrate, successively is provided with at least a basic layer, decoration layer and transparent top layer, wherein the tip of the V-groove remains remote from the top layer and remains remote from the decoration layer. The farther the tip of the V-groove is sitting in the plate-shaped material, the easier it will be to bend the material around a corner. Preferably, the V-groove in fact extends up into the aforementioned basic layer, or the aforementioned tip of the V-groove is situated in this basic layer, for example, at a distance below the decoration layer which is smaller than half of the thickness of the basic layer.

The invention will be further illustrated herein below by means of drawings, which very schematically represent embodiment examples of the invention.
- Fig. 1 is a cross-sectional view of an embodiment example of a skirting board accordi ng to the i nventi on;
- Fig. 2 is a same view as Fig. 1 of an alternative embodiment example of the ski rti ng board;
- Figs. 3-5 are cross-sectional views of a skirting board in various production stages for illustrating an embodi ment example of the method according to the invention;
- Figs. 6 and 7, 8 and 9, 10 and 11 are views, respectively correspondi ng to Figs. 4 and 5, of alternative embodiment examples, which do not pertain to the invention but are illustrative for some of the claimed features;
- Fig. 12 is a view corresponding to Fig. 1 of an alternative skirting board, wherein the skirting board is realized as a renovation skirting board;
- Fig. 13 is a view corresponding to Fig. 12 of an alternative embodiment example of a renovation skirting board;
- Fig. 14 is a same view as Fig. 13, however, illustrating a situation in which the skirting board according to Fig. 13 is shortened and mounted;
- Fig. 15 is a view corresponding to Fig. 13, wherein the shortening of the skirting board according to Fig. 13 is illustrated.

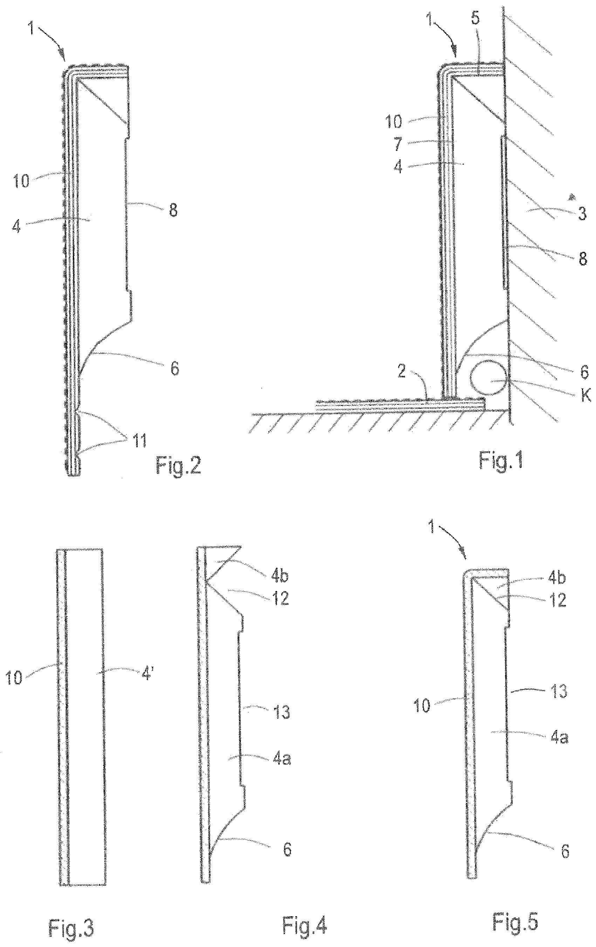

Fig. 1 shows an embodiment example of a decoration system with a skirting board 1 according to the invention. The decoration system comprises a floor covering 2 on which the skirting board 1 is resting. Further, Fig. 1 shows that the skirting board 1, in this case, is attached against a wall 3. Hereby, the skirting board 1 forms a transition between the floor coveri ng 2 and the wall 3. In this case, the floor covering 2 comprises LVT panels. LVT is the abbreviation for Luxury Vinyl Tile, and LVT floors also are indicated as PVC floors. PVC floors often are composed of three layers, for example: a basic layer of 1-4 mm, comprising a vinyl composite, which comprises vinyl with fillers, such as plasticizers, binding agents and stabilizers, a transparent top layer, which, for example, comprises a so-called rigid vinyl film having a thickness of 0.2-1 mm and comprises vinyl with little or no plasticizers, and a decoration layer situated between the basic layer and the top layer, which can comprise a vinyl sheet of 0.1-1 mm with a printed thereon decoration pattern. A plate or panel of LVT material, on the one hand, is bendable, however, on the other hand, is rigid in a direction in the plane of the plate-shaped material. An advantage of LVT is that it is a waterproof and wear-resistant material. The LVT floor according to Fig. 1 in this case also has three layers, wherein the top layer is provided with a surface structure, for example, a wood nerve structure.

The embodiment example represented in Fig. 1 of the skirting board 1 comprises an opposed lower side 6 and a front side 7 and back side 8 situated opposite to each other. The front side 7 and the back side 8 extend between the lower side 6 and the upper side 5. Further, the skirting board 1 is provided with a plate-shaped material 10, in this case the same type of LVT material as the floor covering 2, which is attached to the front side 7 and the upper side 5 of the core 4, for example, by means of gluing or laminating. In Fig. 1, a triple-layered LVT material is shown, however, a deviating number of layers are possible as well. As the plate-shaped material 10 of the skirting board 1 consists of the same material as that of the floor covering 2, the top layer thereof also has the same surface structure. Moreover, it is possible that the plate-shaped material 10 in fact has the same top layer and decoration layer as the floor covering, however, that the basic layer is thinner than that of the floor covering. Hereby, a thinner plate-shaped material 10 can be obtained, whereas the same appearance is maintained.

The plate-shaped material 10 covers the upper side 5 as well as the front side 7 of the core 4 and continues uninterruptedly from the wall 3 along the upper side 5 and the front side 7 up to beyond the lower side 6 of the core 4. In the installed situation of the skirting board 1, as shown in Fig. 1, the free extremity of the plate-shaped material 10 rests on the floor covering 2. Hereby, a distance is present between the floor covering 2 and the core 4. An advantage hereof is that, when water is reaching the space underneath the core 4, comi ng from the floor covering 2, the core 4 remai ns free from the water. T herefore, the core 4 can be made of a relatively cheap, light and water-absorbing material, such as light-weight MDF with a lower density than 600 kg/m³. However, the core 4 also can be made of another, possibly wood-containing, material, such as WPC, thermoplastic or extruded material. In Fig. 1 is also illustrated that the space underneath the core can be applied for hiding a cable K from view.

Fig. 1 represents a cross-section of a more or less block-shaped skirting board 1, wherein the plate-shaped material forms an angle of 90é around the core 4, however, many alternative forms with other corner forms and corner dimensions are possible. The thickness of the plate-shaped material 10 is smaller than the distance between the front side 7 and the back side 8 of the core 4 and also smaller than the distance between the upper side 5 and the lower side 6 of the core 4. The thickness of the plate-shaped material is larger than 1.8 mm and more particularly the thickness is larger than 2 mm, as then the portion protrudi ng from the lower side 6 of the core 4 offers sufficient strength. On the other hand, it is an advantage when the thickness is smaller than 2.5 mm, such that it still can be easily bent over an angle of 90é of the core 4.

Fig. 2 represents an alternative embodi ment example of the skirting board 1, wherein the portion of the plate-shaped material 10 protruding from the lower side 6 of the core 4 is provided with two notches 11. The notches 11 are situated at the side of the plate-shaped material 10 directed towards the core 4 and extend parallel to each other in the longitudinal direction of the skirting board 1. Due to the presence of the notches 11, the height of the ski rti ng board 1 can be shortened in a simple manner, as desi red, for example, by means of a cutter knife. The notches 11 are made only in the basic layer of the plate-shaped material 10 in order to provide for that the notches 11 are i nvisi ble at the opposite side of the plate-shaped material 10.

Figs. 3-5 show in steps an embodiment example of the method for manufacturing a skirting board 1 according to the invention. First, a large sheet of LVT of, for example, approximately 2 x 2.5 m, from which floor panels can be cut as well, is glued onto a substrate of MDF with a thickness of, for example, 8 mm, after which the obtained semi-finished product is cut to separate strips. A cross-sectional view of such strip is shown in Fig. 3. The substrate shown in Fig. 3, of which later the core 4 will be created, is indicated with reference number 4'. The substrate 4' is block-shaped and does not yet have the form of the core 4, such as a skirting board 1 according to the invention. The length of the strip can be made in a simple manner to the standard di mension for ski rti ng boards of 2.4 m.

Fig. 4 illustrates the strip after the substrate 4' has been milled at various locations. A mongst others, a V -groove 12 has been milled into the substrate 4', such that two separate core parts 4a and 4b are formed. The core parts 4a and 4b have directed towards each other contact surfaces at opposite sides of the V-groove 12, which contact surfaces, in a subsequent treatment step, are brought towards each other by bending the plate-shaped material 10 attached to the core parts 4a, 4b, after which the core parts 4a and 4b are glued to each other at the location of the contact surfaces. The result thereof is shown in Fig. 5, wherein the location of the glued contact surfaces is indicated by reference number 12'.

Fig. 4 further shows that after the milling treatment a recess 13 is formed. In the fi nal ski rti ng board 1, this recess serves for receiving glue for attachi ng the skirting board 1 to the wall. Further, Fig. 4 shows that the substrate 4' is milled such that the lower side 6 of the core 4 of the finally to be formed skirting board 1 with the portion of the plate-shaped material 10 protruding from the lower side 6 is created. The resulting skirting board 1 is shown in Fig.5.

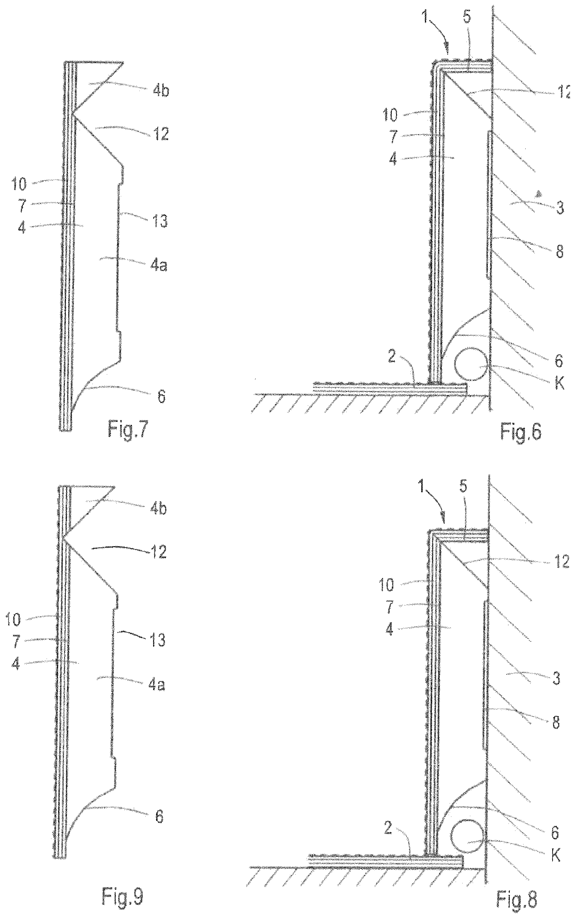

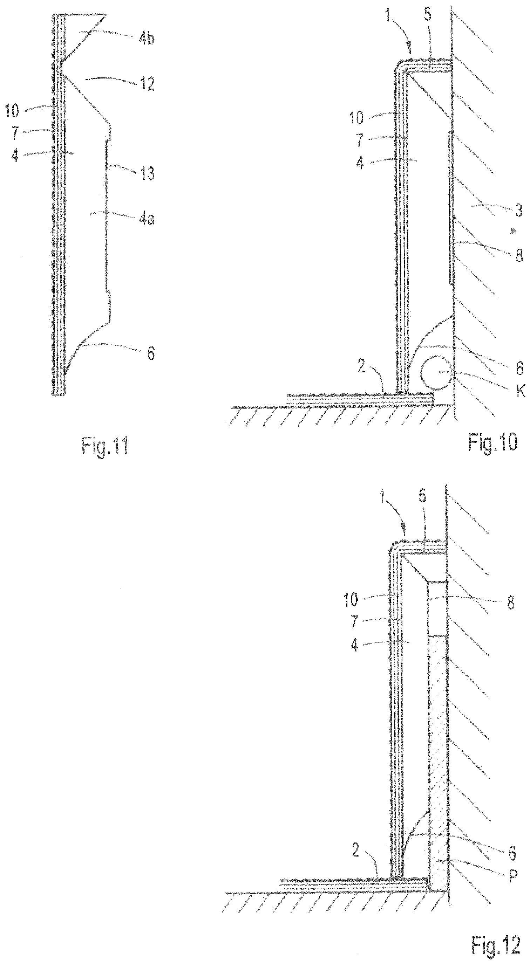

Fig. 6 and 7, 8 and 9, 10 and 11 illustrate alternative embodi ment examples of the method for manufacturing a skirting board 1. In these cases, the plate-shaped materi al is a triple-layered LVT material, as shown in Fig. 1, with successively a basic layer, decoration layer and top layer, as seen from the core 4. In Fig. 7, 9 and 11 can be seen that the V-grooves 12 have different depths and shapes, which exerts an influence on the folding over of the LVT material. Fig. 7 illustrates an embodiment not pertaining to the invention wherein the V -groove 12 reaches up to the decoration layer, whereas Fig. 9 illustrates an embodiment not pertaining to the invention where the V-groove 12 reaches up to the top layer. In the situation, not pertaining to the invention and accordi ng to Fig. 11, the V -groove 12 also reaches up to the decoration layer, but the tip of the V -groove 12 is flattened and the core parts 4a and 4b are lying farther apart than in the situation according to Fig. 7. Thereby, when folding over, the tension on the top layer and decoration layer of the plate-shaped material 10 is limited.

Fig. 12 shows an alternative embodiment example of the skirting board 1. In this case, the skirting board 1 is made as a renovation skirting board. This can be applied, for example, when renovating rooms which are provided with ceramic floors and skirting boards. In Fig. 12, an existing skirting board is indicated by the letter P. The core 4 of the skirting board 1 has a recess in which the existing skirting board P can be received. The back side 8 of the core 4 can be glued against the wall 3.

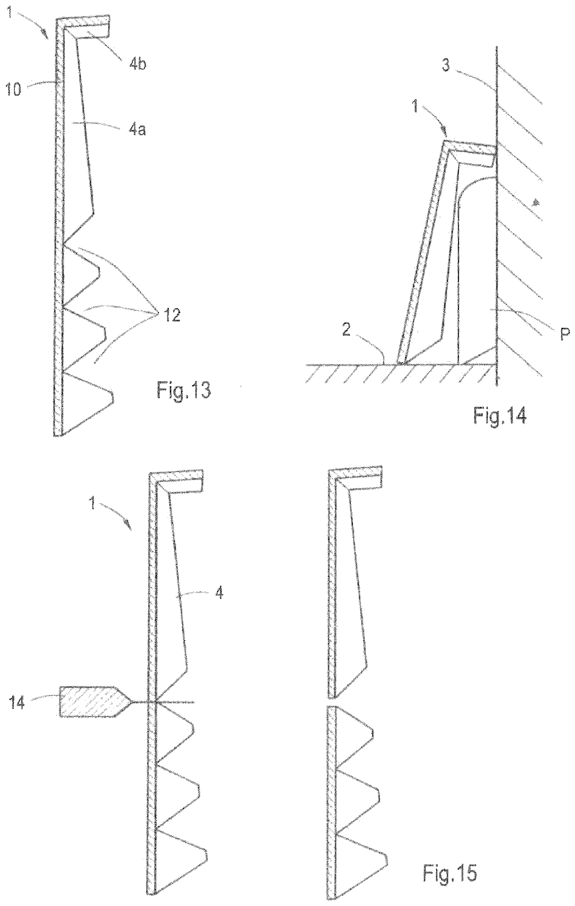

Fig. 13 shows an alternative embodiment example of a renovation skirting board 1. The core of the skirting board 1 is indicated by 4a and 4b for the core parts in order to indicate that this skirting board 1 can be manufactured in a same manner as the herein above-described skirting boards and is illustrated, for example, in Fig. 4 and 5. Fig. 13 also shows that the core of the skirting board 1 is provided with three notches 12. These facilitate shortening the skirting board 1, such that the desired height of the skirting board 1 can be chosen at the building site by the installing person. In Fig. 15, it is illustrated that the plate-shaped material 10 at the location of a ti p of one of the notches 12 can be cut through with a cutter knife 14. Fig. 14 shows that the renovation skirting board 1 resulting therefrom can be placed over an existi ng skirting board P and can be attached thereto, for example, by means of glue.

In Fig. 13-15 is shown that in the represented embodiment example, which does not pertain to the invention, the plate-shaped material 10 of the renovation skirting board 1 does not protrude from the lower side of the core. Generally, such renovation skirting board can be defined as follows: a skirting board, comprising a core with an upper side, an opposed lower side and a front side and back side situated opposite to each other and extending between the upper side and the lower side, and a plate-shaped material, which is attached at least to the front side of the core, wherein the back side of the core is provided with one or more notches extending at a distance from the upper side in the longitudinal direction of the skirting board. Preferably, the tip of a notch reaches up to the plate-shaped material. The plate-shaped material can have the dimensions and features as described herein above. Also, the method for manufacturing such skirting board can correspond to the herein above-described method in respect to the manufacture of core parts and the folding over of the plate-shaped material.

The invention is not limited to the herein above-described embodiment examples, which can be varied in different manners within the scope of the claims.

## Claims

1. A skirting board (1), comprising a core (4) with an upper side (5), an opposed lower side (6) and a front side (7) and back side (8) situated opposite to each other and extending between the lower side (6) and the upper side (5), and a plate-shaped material (10), which is attached to the core (4) and covers at least the front side (7), wherein the plate-shaped material (10), seen from the upper side (5) of the core (4), extends to beyond the lower side (6) of the core (4), whereby the plate-shaped material (10) is a synthetic material sheet made of a vinyl-containing material and having a thickness larger than 1.8 mm, wherein said synthetic material sheet at least comprises a basic layer, a decoration layer and a transparent top layer, wherein said plate-shaped material (10) is bent at the location of the tip of a V-groove, such that said plate-shaped material also covers said upper side (5) and wherein said V-groove (12) is provided in the core (4) in the direction of the plate-shaped material (10), however remaining remote from the top layer and the decoration layer, such that at least the side of the plate-shaped material (10) facing away from the core covers the front side (7) and the upper side (5) of the core (4) uninterruptedly.

2. A skirting board (1) according to claim 1, wherein the thickness of the plate-shaped material (10) is smaller than the distance between the front side (7) and the back side (8) of the core (4) and/or is smaller than the distance between the upper side (5) and the lower side (6) of the core (4).

3. A skirting board (1) according to any of the preceding claims, wherein the thickness of the plate-shaped material (10) is larger than 2 mm.

4. A skirting board (1) according to any of the preceding claims, wherein the synthetic material sheet is adhered onto the core (4).

5. A skirting board (1) according to any of the preceding claims, wherein the core (4) is made of a wood-containing material.

6. A skirting board (1) according to any of the preceding claims, wherein the portion of the plate-shaped material (10) protruding from the lower side (6) of the core (4) is provided with at least one groove (11), which extends in the longitudinal direction of the skirting board (1) and is situated at the side of the plate-shaped material (10) directed towards the core (4).

7. A skirting board (1) according to claim 6, wherein the groove is a first groove (11) and the plate-shaped material (10) is provided with at least one second groove (11), which extends parallel to the first groove (11) and is situated at the side of the plate-shaped material (10) directed towards the core (4).

8. A skirting board according to any of the preceding claims, wherein said basic layer has a thickness of 1 to 4 mm and comprises a vinyl composite of vinyl and fillers.

9. A skirting board according to any of the preceding claims, wherein said top layer is provided with a surface structure.

10. A skirting board according to any of the preceding claims, wherein said decoration layer comprises a vinyl sheet of 0.1 to 1 mm with a printed thereon decoration pattern.

11. A decoration system, comprising a floor covering (2), which is made of a luxury vinyl flooring material, and a skirting board (1) according to any of the preceding claims with a core and a plate-shaped material attached to the core (4), wherein the plate-shaped material (10) is also made of a vinyl flooring material.

12. A decoration system according to claim 11, wherein said plate-shaped material and said vinyl flooring material comprise a top layer with the same surface structure.

13. A method for manufacturing a skirting board (1) according to any of claims 1 to 10 with a core and a plate-shaped material attached to the core (4), wherein the core (4) to be formed comprises a first core part (4a) and a second core part (4b), which core parts (4a, 4b) are secured to the plate-shaped material (10) and each are provided with respective contact locations situated at a distance from each other, wherein the first and second core part (4a, 4b) are moved towards each other by bending the plate-shaped material (10) and are attached to each other at the contact locations in order to form the core (4) of the skirting board (1, wherein the first and second core part (4a, 4b) are formed by first securing the plate-shaped material (10) to a substrate (4') and subsequently providing a V-groove (12) in the substrate (4') in the direction of the plate-shaped material (10), wherein the plate-shaped material, seen from the substrate (4'), successively is provided with at least a basic layer, decoration layer and transparent top layer, wherein the tip of the V-groove (12) remains remote from the top layer and remains remote from the decoration layer.

14. A method according to claim 13, wherein the boundary surfaces on opposite sides of the V-groove (12) form the contact locations, which are glued to each other for forming the core (4) of the skirting board (1).

## Patentansprüche

1. Fußleiste (1), umfassend einen Kern (4) mit einer Oberseite (5), einer gegenüberliegenden Unterseite (6) und einer Vorderseite (7) und Rückseite (8), die einander gegenüberliegen und sich zwischen der Unterseite (6) und der Oberseite (5) erstrecken, und ein plattenförmiges Material (10), das am Kern (4) befestigt ist und mindestens die Vorderseite (7) bedeckt, wobei sich das plattenförmige Material (10), von der Oberseite (5) des Kerns (4) gesehen, über die Unterseite (6) des Kerns (4) erstreckt, wobei das plattenförmige Material (10) eine synthetische Materialbahn ist, die aus einem vinylhaltigen Material besteht und eine Dicke größer als 1,8 mm aufweist, wobei die synthetische Materialbahn mindestens eine Basisschicht, eine Dekorationsschicht und eine durchsichtige Deckschicht umfasst, wobei das plattenförmige Material (10) an der Stelle der Spitze einer V-Kerbe gebogen ist, sodass das plattenförmige Material auch die Oberseite (5) bedeckt und wobei die V-Kerbe (12) im Kern (4) in der Richtung des plattenförmigen Materials (10) vorgesehen ist, jedoch fern von der Deckschicht und der Dekorationsschicht bleibt, sodass mindestens die Seite des plattenförmigen Materials (10), die vom Kern weg zeigt, die Vorderseite (7) und die Oberseite (5) des Kerns (4) ununterbrochen bedeckt.

2. Fußleiste (1) nach Anspruch 1, wobei die Dicke des plattenförmigen Materials (10) kleiner ist als der Abstand zwischen der Vorderseite (7) und der Rückseite (8) des Kerns (4) und/oder kleiner ist als der Abstand zwischen der Oberseite (5) und der Unterseite (6) des Kerns (4).

3. Fußleiste (1) nach einem der vorstehenden Ansprüche, wobei die Dicke des plattenförmigen Materials (10) größer als 2 mm ist.

4. Fußleiste (1) nach einem der vorstehenden Ansprüche, wobei die synthetische Materialbahn an den Kern (4) geklebt ist.

5. Fußleiste (1) nach einem der vorstehenden Ansprüche, wobei der Kern (4) aus einem holzhaltigen Material gemacht ist.

6. Fußleiste (1) nach einem der vorstehenden Ansprüche, wobei der Abschnitt des plattenförmigen Materials (10), der von der Unterseite (6) des Kerns (4) hervorragt, mit mindestens einer Kerbe (11) versehen ist, die sich in der Längsrichtung der Fußleiste (1) erstreckt und an der Seite des plattenförmigen Materials (10) liegt, die hin zum Kern (4) gerichtet ist.

7. Fußleiste (1) nach Anspruch 6, wobei die Kerbe eine erste Kerbe (11) ist und das plattenförmige Material (10) mit mindestens einer zweiten Kerbe (11) versehen ist, die sich parallel zur ersten Kerbe (11) erstreckt und an der Seite des plattenförmigen Materials (10) liegt, die hin zum Kern (4) gerichtet ist.

8. Fußleiste nach einem der vorstehenden Ansprüche, wobei die Basisschicht eine Dicke von 1 bis 4 mm hat und einen Vinylverbundstoff aus Vinyl und Füllern umfasst.

9. Fußleiste nach einem der vorstehenden Ansprüche, wobei die Deckschicht mit einer Oberflächenstruktur versehen ist.

10. Fußleiste nach einem der vorstehenden Ansprüche, wobei die Dekorationsschicht eine Vinylbahn von 0,1 bis 1 mm mit einem aufgedruckten Ziermuster umfasst.

11. Dekorationssystem, umfassend einen Bodenbelag (2), der aus einem LVT Vinylbodenbelagsmaterial besteht, und eine Fußleiste (1) nach einem der vorstehenden Ansprüche mit einem Kern und einem plattenförmigen Material, das am Kern (4) befestigt ist, wobei das plattenförmige Material (10) aus einem Vinylbodenbelagsmaterial besteht.

12. Dekorationssystem nach Anspruch 11, wobei das plattenförmige Material und das Vinylbodenbelagsmaterial eine Deckschicht mit derselben Oberflächenstruktur umfassen.

13. Verfahren zur Herstellung einer Fußleiste (1) nach einem der Ansprüche 1 bis 10 mit einem Kern und einem plattenförmigen Material, das am Kern (4) befestigt ist, wobei der zu bildende Kern (4) einen ersten Kernteil (4a) und einen zweiten Kernteil (4b) umfasst, welche Kernteile (4a, 4b) am plattenförmigen Material (10) gesichert sind und jeweils mit jeweiligen Kontaktstellen versehen sind, die mit Abstand zueinander liegen, wobei der erste und zweite Kernteil (4a, 4b) durch Biegen des plattenförmigen Materials (10) zueinander bewegt werden und an den Kontaktstellen aneinander befestigt werden, um den Kern (4) der Fußleiste (1) zu bilden, wobei der erste und zweite Kernteil (4a, 4b) durch zuerst Sichern des plattenförmigen Materials (10) an einer Trägerschicht (4') und anschließendes Vorsehen einer V-Kerbe (12) in der Trägerschicht (4') in der Richtung des plattenförmigen Materials (10) gebildet werden, wobei das plattenförmige Material, von der Trägerschicht (4') gesehen, anschließend mit mindestens einer Basisschicht, Dekorationsschicht und durchsichtigen Deckschicht versehen wird, wobei die Spitze der V-Kerbe (12) von der Deckschicht fernbleibt und von der Dekorationsschicht fernbleibt.

14. Verfahren nach Anspruch 13, wobei die Grenzflächen an gegenüberliegenden Seiten der V-Kerbe (12) die Kontaktstellen bilden, die aneinandergeklebt werden, um den Kern (4) der Fußleiste (1) zu bilden.

## Revendications

1. Plinthe (1) comprenant une partie centrale (4) munie d'un côté supérieur (5), d'un côté inférieur opposé (8), ainsi que d'un côté avant (7) et d'un côté arrière (8) situés à l'opposé l'un de l'autre et s'étendant entre le côté inférieur (6) et le côté supérieur (5), et une matière (10) possédant une configuration en forme de plaque qui est fixée à la partie centrale (4) et qui recouvre au moins le côté avant (7) ; dans laquelle la matière (10) possédant une configuration en forme de plaque, lorsqu'on regarde à partir du côté supérieur (5) de la partie centrale (4), s'étend jusqu'au-delà du côté inférieur (6) de la partie centrale (4) ; dans laquelle la matière (10) possédant une configuration en forme de plaque représente une feuille en matière synthétique constituée d'une matière à teneur vinylique et possédant une épaisseur qui est supérieure à 1,8 mm ; dans laquelle ladite feuille en matière synthétique comprend au moins une couche de base, une couche de décoration et une couche supérieure transparente ; dans laquelle ladite matière (10) possédant une configuration en forme de plaque est pliée à l'endroit de la pointe d'une rainure en V, d'une manière telle que ladite matière possédant une configuration en forme de plaque recouvre également ledit côté supérieur (5) ; et dans laquelle ladite rainure en V (12) est prévue dans la partie centrale (4) dans la direction de ladite matière (10) possédant une configuration en forme de plaque, en restant néanmoins à distance de la couche supérieure et de la couche de décoration, d'une manière telle qu'au moins le côté de la matière (10) possédant une configuration en forme de plaque qui se détourne de la partie centrale recouvre le côté avant (7) et le côté supérieur (5) de la partie centrale (4) de manière ininterrompue.

2. Plinthe (1) selon la revendication 1, dans laquelle l'épaisseur de la matière (10) possédant une configuration en forme de plaque est inférieure à la distance s'étendant entre le côté avant (7) et le côté arrière (8) de la partie centrale (4) et/ou est inférieure à la distance s'étendant entre le côté supérieur (5) et le côté inférieur (6) de la partie centrale (4).

3. Plinthe (1) selon l'une quelconque des revendications précédentes, dans laquelle l'épaisseur de la matière (10) possédant une configuration en forme de plaque est supérieure à 2 mm.

4. Plinthe (1) selon l'une quelconque des revendications précédentes, dans laquelle la feuille en matière synthétique adhère à la partie centrale (4).

5. Plinthe (1) selon l'une quelconque des revendications précédentes, dans laquelle la partie centrale (4) est constituée d'une matière contenant du bois.

6. Plinthe (1) selon l'une quelconque des revendications précédentes, dans laquelle la portion de la matière (10) possédant une configuration en forme de plaque faisant saillie par rapport au côté inférieur (6) de la partie centrale (4) est munie d'au moins une rainure (11) qui s'étend dans la direction longitudinale de la plinthe (1) et est située du côté de la matière (10) possédant une configuration en forme de plaque orientée vers la partie centrale (4).

7. Plinthe (1) selon la revendication 6, dans laquelle la rainure représente une première rainure (11) et la matière (10) possédant une configuration en forme de plaque est munie d'au moins une seconde rainure (11) qui s'étend parallèlement à la première rainure (11) et qui est située du côté de la matière (10) possédant une configuration en forme de plaque orienté vers la partie centrale (4).

8. Plinthe selon l'une quelconque des revendications précédentes, dans laquelle ladite couche de base possède une épaisseur de 1 à 4 mm et comprend un composite à base de vinyle, de vinyle et de matières de charge.

9. Plinthe selon l'une quelconque des revendications précédentes, dans laquelle ladite couche supérieure est munie d'une structure superficielle.

10. Plinthe selon l'une quelconque des revendications précédentes, dans laquelle ladite couche de décoration comprend une feuille de vinyle de 0,1 à 1 mm sur laquelle est imprimé un motif de décoration.

11. Système de décoration comprenant un revêtement de sol (2) qui est constituée par un matériau de revêtement de sol à base de vinyle de luxe, et par une plinthe (1) selon l'une quelconque des revendications précédentes, comprenant une partie centrale et une matière possédant une configuration en forme de plaque fixée à la partie centrale (4), dans lequel la matière (10) possédant une configuration en forme de plaque est également constituée d'un matériau de revêtement de sol en vinyle.

12. Système de décoration selon la revendication 11, dans lequel ladite matière possédant une configuration en forme de plaque et ledit matériau de revêtement de sol en vinyle comprennent une couche supérieure possédant la même structure superficielle.

13. Procédé pour la fabrication d'une plinthe (1) selon l'une quelconque des revendications 1 à 10, comprenant une partie centrale et une matière possédant une configuration en forme de plaque fixée à la partie centrale (4) ; dans lequel la partie centrale (4) qui doit être réalisée comprend un premier élément de partie centrale (4a) et un second élément de partie centrale (4b), lesdits éléments de partie centrale (4a, 4b) étant fixés à la matière (10) possédant une configuration en forme de plaque et chacun étant muni d'endroits de contact respectifs situés à une distance les uns des autres ; dans lequel on déplace le premier et le second élément de partie centrale (4a, 4b) en direction l'un de l'autre en pliant la matière (10) possédant une configuration en forme de plaque et on les fixe l'une à l'autre aux endroits de contact dans le but d'obtenir la partie centrale (4) de la plinthe (1) ; dans lequel on forme le premier et le second élément de partie centrale (4a, 4b) en fixant d'abord la matière (10) possédant une configuration en forme de plaque à un substrat (4') et en procurant ensuite une rainure en V (12) dans le substrat (4') dans la direction de la matière (10) possédant une configuration en forme de plaque ; dans lequel on munit ensuite la matière possédant une configuration en forme de plaque, lorsqu'on regarde à partir du substrat (4'), au moins d'une couche de base, d'une couche de décoration et d'une couche supérieure transparente ; dans lequel la pointe de la rainure en V (12) reste à distance de la couche supérieure et reste à distance de la couche de décoration.

14. Procédé selon la revendication 13, dans lequel les surfaces de séparation sur les côtés opposés de la rainure en V (12) forment les endroits de contacts qui sont collés les uns aux autres pour former la partie centrale (4) de la plinthe (1).
